# EUROPEAN PATENT SPECIFICATION

(11) **EP 1 678 835 B1**
(45) Date of publication and mention of the grant of the patent: **21.09.2011**
(21) Application number: 04755283.1
(22) Date of filing: 16.06.2004
(51) Int. Cl.: H04W 36/00, H04W 36/14, H04W 36/36

(54) **Dual-mode communication device and call handoff method**
Dual-mode Kommunikationsendgerät und Gesprächsumschaltungsverfahren
Appareil de communication bimode et procédé de transfert d'appel

(30) Priority: 30.06.2003 US 610277
(43) Date of publication of application: 12.07.2006
(73) Proprietor: Motorola Solutions, Inc., Schaumburg IL 60196 (US)
(72) Inventor: SAGI, Uday, C., Fort Worth, TX 76137 (US); DORENBOSCH, Jheroen, P., Paradise, TX 76073 (US); ALEN, Anand, B., C hicago, IL 60661 (US)
(74) Representative: Treleven, Colin
(86) International application number: PCT/US2004/019006
(87) International publication number: WO 2005/006570

(56) References cited:
- WO-A-01/31472
- US-A1- 2002 147 008
- US-A1- 2004 087 307
- US-A1- 2004 266 426
- US-B1- 6 721 565
- JOHNSTON A AND LEVIN O: "Session Initiation Protocol Call Control - Conferencing for User Agents draft-johnston-sipping-cc-conferencing-01" INTERNET ENGINEERING TASK FORCE (IETF) DRAFT, 7 February 2003 (2003-02-07), XP015003824
- SCHULZRINNE H ET AL: "Application-Layer Mobility Using SIP" ACM MOBILE COMPUTING AND COMMUNICATIONS REVIEW, vol. 4, no. 3, July 2000 (2000-07), pages 47-57, XP000992003 ISSN: 1091-1669

## Description

### BACKGROUND OF THE INVENTION

### Field of the Invention

The present invention relates generally to mobile communication units and wireless networks, and, more particularly, to a method and apparatus for providing a handoff for such mobile communication unit between different wireless networks.

### Description of the Related Art

Loosely coupled Wireless Local Area Networks (WLAN) supported by WLAN servers such as, for example, enterprise servers provide users with high-speed wireless Internet access and an inexpensive alternative to telephone services as well as other real-time applications. The users can carry a wireless communication unit (referred to as a communication unit) with dual-use capability so that the communication unit can provide voice and data communication over the enterprise server when the communication unit is in a WLAN (in a coverage area and registered with the WLAN) and over a cellular wide area network (cellular network) such as any of the cellular networks when the communication unit is outside of the WLAN.

When the user is moving between different networks such as, for example, from a WLAN to a conventional network and vice versa, this movement causes an undesirable disruption in communication unit service. What is needed is a method and apparatus for providing a seamless handoff for a communication unit during an on-going call when the communication unit moves between different networks.

WO 01/31472 A discloses a mobility management protocol for supporting real-time and non-real-time multimedia applications on mobile stations of third generation internet protocol (3G-IP) networks. The arrangement utilizes as well as extends the session initiation protocol (SIP) to provide for domain hand-off (i.e., roaming) and subnet hand-off (i.e., macro-mobility) so that users can access the network from any location using their own mobile station as they roam across different 3G-IP networks.

JOHNSTON A AND LEVIN O: "Session Initiation Protocol Call Control - Conferencing for User Agents draft-johnston-sipping-cc-conferencing-01" INTERNET ENGINEERING TASK FORCE (IETF) DRAFT, 7 February 2003 (2003-02-07), XP015003824 defines conferencing call control features for the Session Initiation protocol (SIP).

### BRIEF DESCRIPTION OF THE DRAWINGS

The accompanying figures, where like reference numerals refer to identical or functionally similar elements and which together with the detailed description below are incorporated in and form part of the specification, serve to further illustrate a preferred embodiment and to explain various principles and advantages in accordance with the present invention.
FIG. 1 depicts, in a simplified and representative form, an exemplary environment in which a method and apparatus for providing a handoff between different networks for communications with a communication unit are implemented.
FIG. 2 depicts a block diagram of a communication unit arranged for a seamless handoff between different networks.
FIG. 3 depicts a block diagram of an enterprise server arranged to provide or facilitate a seamless handoff between different networks.
FIG. 4 illustrates a diagram of a preferred method embodiment of providing a seamless handoff from a wireless local area network to a cellular wide area network.
FIG. 5 illustrates a diagram of a preferred method embodiment of providing a seamless handoff from a wide area network to a wireless local area network.
FIG. 6 illustrates a diagram of another method embodiment of providing a seamless handoff from a wide area network to a wireless local area network.

### DETAILED DESCRIPTION OF THE PREFERRED EXEMPLARY EMBODIMENTS

In overview, the present disclosure concerns wireless communications devices or units, often referred to as communication units, such as cellular phone or two-way radios and the like that have dual operating mode capability and communications systems that provide services such as voice and data communications services to communication units. More particularly, various inventive concepts and principles are embodied in systems, communication units, and methods therein for providing the communication unit with a seamless handoff or handover between different networks. Note that communication unit may be used interchangeably herein with wireless subscriber device or unit and each of these terms denotes a device ordinarily associated with a user and typically a wireless mobile device that may be used with a public network in accordance with a service agreement or within a private network. Examples of such include personal digital assistants, personal assignment pads, and personal computers equipped for wireless operation, a cellular handset or device, or equivalents thereof provided such units are arranged and constructed for operation in different networks. Note that different networks may refer to a cellular wide area network and a wireless local area network or first and second wireless networks.

The communication systems and communication units that are of particular interest are those that may provide or facilitate voice communications services or data or messaging services over cellular wide area networks (WANs), such as conventional two way systems and devices, various cellular phone systems including analog and digital cellular, CDMA (code division multiple access) and variants thereof, GSM, GPRS (General Packet Radio System), 2.5G and 3G systems such as UMTS (Universal Mobile Telecommunication Service) systems, integrated digital enhanced networks and variants or evolutions thereof. Furthermore the wireless communication units or devices of interest have short range communications capability normally referred to as WLAN capabilities, such as IEEE 802.11, Bluetooth, or Hiper-Lan and the like that preferably utilize CDMA, frequency hopping, or TDMA access technologies and one or more of various networking protocols, such as TCP/IP (Transmission Control Protocol/Internet Protocol), UDP/IP (Universal Datagram Protocol/ Internet Protocol), IPX/SPX (Inter-Packet Exchange/Sequential Packet Exchange), Net BIOS (Network Basic Input Output System) or other protocol structures such as UDP/UP.

The instant disclosure is provided to further explain in an enabling fashion the best modes of performing one or more embodiments of the present invention. The disclosure is further offered to enhance an understanding and appreciation for the inventive principles and advantages thereof, rather than to limit in any manner the invention. The invention is defined solely by the appended claims including any amendments made during the pendency of this application and all equivalents of those claims as issued.

It is further understood that the use of relational terms such as first and second, and the like, if any, are used solely to distinguish one from another entity, item, or action without necessarily requiring or implying any actual such relationship or order between such entities, items or actions.

Much of the inventive functionality and many of the inventive principles when implemented, are best supported with or in software or integrated circuits (ICs), such as a digital signal processor and software therefore or application specific ICs. It is expected that one of ordinary skill, notwithstanding possibly significant effort and many design choices motivated by, for example, available time, current technology, and economic considerations, when guided by the concepts and principles disclosed herein will be readily capable of generating such software instructions or ICs with minimal experimentation. Therefore, in the interest of brevity and minimization of any risk of obscuring the principles and concepts according to the present invention, further discussion of such software and ICs, if any, will be limited to the essentials with respect to the principles and concepts used by the preferred embodiments.

As further discussed below various inventive principles and combinations thereof are advantageously employed to determine if the communication unit should switch from the initial network to the second network for obtaining service, request a handoff to the second network by sending a session initiation protocol message addressed to one of a public number and a private number associated with the communication unit, and accept a new call from an enterprise server over the second network.

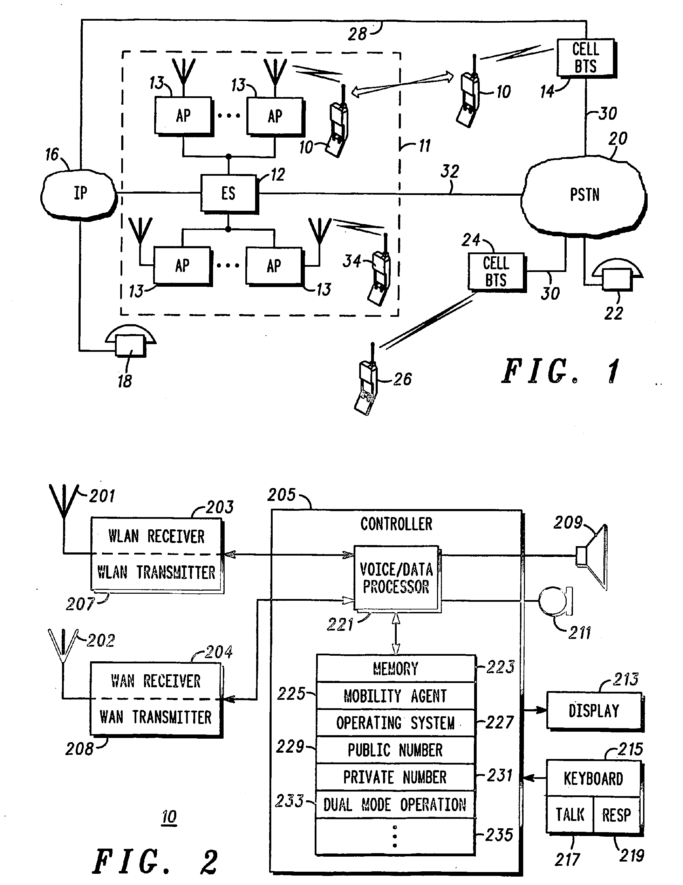

Referring now to FIG. 1, a simplified and representative environment or system in which the apparatus and method according to one or more preferred embodiments will be discussed and described. The system generally shows a first communication unit 10 that is moving between services of or provided by a wireless local area network (WLAN) 11, specifically by an enterprise server 12 coupled to a plurality of access points 13 (available from suppliers such as Proxim) and services of or provided by a cellular wide area network (WAN), specifically by a cellular base transmitter site (BTS) 14 together with a mobile switching center (not shown). The BTS 14 or plurality of such BTS units provides cellular WAN coverage that may overlap the WLAN 11. Although one BTS 14 is shown for ease of illustration, a plurality of base transmitter sites may provide the cellular WAN coverage.

The communication unit 10 may be in contact with, for example, communication unit 18 via an Internet Protocol (IP) connection 16 using the Internet, communication unit 22 via the public switched telephone network (PSTN) 20, or communication unit 26 via another BTS 24 or cellular or WAN, or finally communication unit 34 via the WLAN 11. Communication units 18, 22, 26, 34 will be referred to generally as target communication units. As appreciated by those skilled in the art, a cellular packet data network 28 connects the IP connection 16 to the cellular BTS 14 for data traffic and a voice network 30 connects the BTS 14 to the PSTN 20 for voice traffic and for the signaling required to conduct legacy voice calls.

Referring to FIG. 2, a block diagram of a preferred embodiment of the communication unit 10 arranged for receiving a seamless handoff between different networks will be discussed and described. The communication unit 10 includes a first antenna 201 that operates to absorb and radiate radio frequency signals. Radio signals that are transmitted from a WLAN, such as, for example, an access point 13 (or LAN transceiver) coupled to the enterprise server 12 are absorbed by the antenna and coupled to a WLAN receiver (or receiving device) 203. Signals that are amplified by and coupled from a WLAN transmitter (or transmitting device) 207 to the antenna are radiated or transmitted or sent to the access point 13 and thus the enterprise server 12 as is known. The specifics of the WLAN air interface and receiver and transmitter will vary with system or access technology, state of the art, etc. but are generally known. The WLAN receiver and transmitter 203, 207 are preferably known IEEE 802.11 compatible devices that are inter coupled as depicted and interactively operate with and are controlled by a controller 205 to provide to, or accept or receive from the controller 205, voice traffic or data messages or signals corresponding thereto as is also known.

Further included in the communications unit 10 is a second antenna 202 that operates to absorb and radiate radio frequency signals that are, respectively, received from a cellular WAN or transmitted or sent to the WAN. The communication unit 10 also includes a WAN receiver 204 that the absorbed signals from the cellular BTS 14 are coupled to and a WAN transmitter 208 that amplifies and provides the signals for transmission or radiation by the antenna 202 to a cellular network such as the cellular BTS 14 as is known. The specifics of the WAN air interface and receiver and transmitter will vary with system or access technology, state of the art, etc. but are generally known. The WAN receiver 204 and transmitter 208 are inter coupled as depicted and interactively operate with and are controlled by the controller 205 to provide to, or accept or receive from the controller 205, voice or data traffic or messages or signals corresponding thereto in a known and similar manner as the WLAN receiver 203 and transmitter 207.

Accordingly, the WLAN receiver and transmitter 203, 207 and the WAN receiver and transmitter 204, 208 as controlled by and in cooperation with the controller and functions thereof provide the communication unit 10 with dual operating mode capability. More particularly, the communication unit 10 is capable of registering with and obtaining service from a cellular WAN provided by or via, for example, the cellular system and corresponding BTS 14 as well as a WLAN 11 as provided by the enterprise server 12. However, the communication unit 10 can optionally have only one receiver and transmitter that are suitable for and adaptable for interfacing with both a cellular WAN and a WLAN.

The controller 205 is coupled to and operates in a known manner together with a speaker or earpiece 209, a microphone 211, a display 213 and a keyboard 215 or set of keys including a talk key 217 and a respond key 219 to provide a user interface. The keyboard 215 can be a known physical keyboard or virtual keyboard that is part of the display 213 and the display 213 is also known and may be a liquid crystal display or the like. If the keys are part of a virtual keyboard the display 213 will need to be touch sensitive or the like in order to convey information to the controller 205. Similarly the speaker or earpiece, microphone, and alerting device are known and widely available.

The controller 205 is essentially a general purpose processor and, preferably includes a voice and data processor 221 coupled to an associated memory 223. The voice and data processor 221 is, preferably, a known processor based element with functionality that will depend on the specifics of the air interface with the WLAN and the cellular WAN as well as various network protocols for voice and data traffic. The processor 221 will operate to encode and decode voice and data messages to provide signals suitable for a transducer or further processing by the controller 205. The processor 221 may include one or more microprocessors, digital signal processors, and other integrated circuits depending on the responsibilities of the controller 205 with respect to signal processing duties that are not here relevant. In any event the controller 205 also includes the memory 223 that may be a combination of known RAM, ROM, EEPROM or magnetic memory.

The memory source or memory 223 is used to store among various other items or programs etc., a mobility agent (MA) 225 generally for, in conjunction with entities at the enterprise server 12, facilitating a seamless handover between different networks. More particularly, the MA 225 is for generating session initiation protocol (SIP) messages that include hand off requests and registration requests and for facilitating handoffs between an initial network and a second network. The memory 223 also includes an operating system 227 as is known, a public number 229 used primarily when communicating via the enterprise server 12 over the WLAN 11, over the PSTN 20 or over the cellular network 30, a private number 231 used primarily when communicating over the cellular WAN and a dual mode operation routine 233 for permitting the communication unit 10 to communicate with different networks.

The public number is a telephone number that terminates on the enterprise server 12. In other words, when a legacy call is made from the PSTN or cellular to the public number 229, the call will be routed by prior art means to the enterprise server 12. In the descriptions below, we will also refer to the addressing of a call or a message to a communication unit's public number 229 over the WLAN 11. It will be understood to those of ordinary skill that when SIP messages are sent to a communication unit 11, 34 while it is in the WLAN, the message will be addressed to a SIP URL.

The above-mentioned routines are machine readable code or software instructions that when executed by the controller or processor included therewith will result in the controller 205 performing the requisite functions of the communication unit 10 such as interfacing with the WAN and WLAN receiver and transmitter, speaker 209, microphone 211, display 213, keyboard 215 and so on including various other routines 235 that are too numerous to mention but that will be evident to one of ordinary skill given a specific communication unit, etc. The reader will appreciate that this listing is merely a brief listing of exemplary routines that will be required or advantageous in effecting a client request and a selection of an output device and that other optional applications may be stored in the memory that have not been mentioned.

The WLAN transmitter 207 is arranged to send signals normally as formulated by the controller 221, such as, for example, a session initiation protocol (SIP) message addressed to the communication unit's public number 229 over the WLAN 11. The WAN transmitter 208 is also arranged to send signals, such as, for example, the SIP message addressed to the target communication unit's public number 229 or private number 231 to the BTS 14. The controller 205, which is coupled to the WLAN transmitter 207 and operates in accordance with the MA 225 and dual-mode operation routine 233 in the memory source 223, forwards the signals to the WLAN or WAN transmitter 207, 208. An indication thereof is generated by the routines and the operating system 227.

The WLAN receiver 203 is arranged to receive signals such as, for example, a call from the enterprise server 12 over the WLAN 11 addressed to the communication unit's public number 229 or private number 231 or a SIP message from the enterprise server 12. The WAN receiver 204 is arranged to receive signals such as, for example, a call from the BTS 14 addressed to the communication unit's private number 231 or a call from one of the target, e.g. other communication units 18, 22, 26, 34 via the BTS 14. The controller 205, which is coupled to the WAN and WLAN receiver and transmitter, and operates in accordance with the MA 225, determines if the communication unit 10 should switch from an initial network to a second network to obtain service, registers the communication unit 10 with the enterprise server 12 for obtaining access to the second network when it is determined that the communication unit 10 should switch to the second network, and requests a handoff to the second network by sending the session initiation protocol message to one of a public number 229 or private number 231 associated with the communication unit 10.

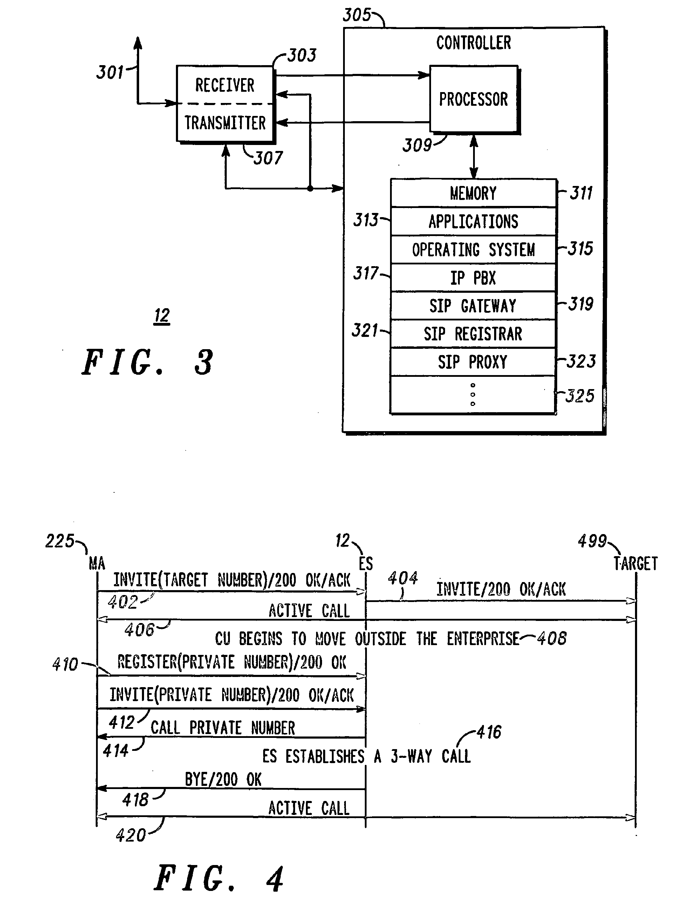

Referring to FIG. 3, a block diagram of a preferred embodiment of the enterprise server 12 will be discussed and described. The enterprise server 12 is preferably a computer server arranged and constructed for among others, providing the WLAN service 11. The enterprise server 12 may serve a single enterprise location or may serve multiple enterprise sites at, for example, different cities. The enterprise server 12 may serve a WLAN hotspot or multiple WLAN hotspots. It may also serve one or more WLAN coverage areas in private homes that may be connected to the enterprise server 12 by, for example, an IP broadband connection. The enterprise server 12 includes a wired connection 301, such as an Ethernet backbone, from the access points 13, the IP connection 16 to the Internet and a link 32 to the PSTN 20. to a receiver 303 and transmitter 307. More particularly, the IP connection 16 permits the receiver 303 and transmitter 307 to interface, using known technologies and devices, with the cellular packet data network 28 that is connected to the BTS 14. Accordingly, the receiver 303 and the transmitter 307 may be implemented as a conventional modem, such as an Ethernet modem. The receiver and transmitter 303, 307 are inter coupled as depicted and interactively operate with and are controlled by a controller 305 to provide to, or accept or receive from the controller 305, data messages or signals corresponding thereto.

The controller 305 is essentially a general-purpose processor and, preferably, includes a fault tolerant multi-processor 309 and a memory source 311. The fault tolerant multi-processor 309 may include one or more microprocessors, digital signal processors, and other integrated circuits depending on the responsibilities of the controller 305 with respect to signal processing duties that are not here relevant. The fault tolerant multi-processor 309 may be replaced by another processor as appreciated by those skilled in the art. The controller 305 has a network connection to the cellular BTS 14 via the IP connection 16 (and also via receiver 303 and transmitter 307). This connection involves numerous additional elements, such as a gateway/firewall in the enterprise, the internet or a proprietary wired Wide Area Network, a gateway into the cellular networks like a GGSN (Gateway GPRS Support Node) or Packet Data Gateway and the core network of the cellular system. More particularly, by using such elements the IP connection 16 permits the controller 305 to interface with the cellular packet data network 28 that is connected to the BTS 14. The controller 305 also has a connection 32 to the PSTN 20 as shown which uses ISUP or another legacy telephony protocol. The controller 305 also includes the memory source 311 that may be a combination of known RAM, ROM, EEPROM or magnetic memory as discussed above.

The memory source or memory 311 is used to store among various other items or programs etc., applications 313 for providing a plurality of users with WLAN service, an operating system 315 for permitting administrative control, an Internet Protocol private branch exchange (IP PBX) 317, a session initiation protocol (SIP) gateway 319, a SIP registrar 321, and an SIP proxy 323. The (SIP) gateway 319 may use and control a separate Media Gateway (not shown) for the transport of the voice data associated with calls. The memory 311 includes various other routines 325 that are too numerous to mention but that will be evident to one of ordinary skill given a specific server task, etc. The reader will appreciate that this listing is merely a brief listing of exemplary routines that will be required or advantageous in effecting the WLAN 11 and that other optional applications may be stored in the memory 311 that have not been mentioned. The SIP entities 319, 321, 323 generally serve as a signaling protocol to create, modify and terminate voice over Internet Protocol conversation between users within the WLAN 11. The SIP entities 319, 321, 323 and the IP PBX 317 will be discussed more fully below.

The IP PBX 317 is an enterprise server based Internet Protocol data network device that switches voice over Internet Protocol traffic. It functions similar to an internal telephone system within a company that switches internal calls between users while permitting users to use the external IP network 16 to communicate with the outside world. The IP PBX 317 uses legacy techniques to connect via the link 32 with the PSTN 20 any cellular system 30, permitting legacy phone calls with the outside world.

The SIP gateway 319 (also customarily called a Media Gateway Controller) converts voice over Internet Protocol calls to landline PSTN calls and vice-versa. Generally, the SIP gateway 319, possibly with a separate Media Gateway (not shown), permits voice communication between an IP communication unit and a regular PSTN communication unit. The SIP gateway 319 may use and control a separate Media Gateway (not shown) for the transport of the voice data associated with calls.

The IP PBX 317 and the SIP gateway 319 provide functionality to bridge calls and to conduct conference calls. This may require dedicated software and hardware that is used to replicate voice bearer data where needed.

The SIP registrar 321 is for accepting registration requests included in SIP messages and offering location services to obtain callee information that is required for placing a voice over Internet Protocol call. The SIP registrar may be a separate device and can be at a remote location. The SIP proxy 323 is an intermediate entity that interprets SIP messages before forwarding them to an SIP server (not shown) on the Internet.

Referring to FIG. 4, the methodology or operation of the communication unit 10 and enterprise server 12 for providing a hand off from the WLAN 11 (or initial network) to the WAN (or second network) will be discussed. In this scenario, the communication unit 10 initiates a call to a target communication unit while the communication unit 10 is within the WLAN 11 and later moves out of the WLAN 11. The target communication unit is depicted by 499 in FIG. 4, but it may be any of communication units 18, 22, 26, 34 shown in FIG. 1.

The methodology begins at 402 when the communication unit 10 initiates a call to the target communication unit 499. The MA 225 determines that the communication unit 10 should use the WLAN 11. This determination may be done by the WLAN receiver 203 receiving a signal from the enterprise server 12 via one of the access points 13 and forwarding the signal to the controller 205. The MA 225 generates a SIP message for sending to the target communication unit 499. The SIP message includes an invite signal as well as an acknowledgement request. The SIP message is depicted as INVITE (TARGET NUMBER)/ 200 OK/ ACK in FIG. 4. The controller 205 forwards this SIP message to the WLAN transmitter 207, which sends it to the enterprise server 12 via one of the access points 13.

At 404, the receiver 303 of the enterprise server 12 receives the SIP message. The controller 305, operating in accordance with the SIP proxy 323, forwards it to the transmitter 307, which sends it to the target communication unit 499.

At 406, the target communication unit 499 replies to the SIP message and an active call/session is established. The session is stored in the enterprise server 12. For simplicities sake, the above described message exchange is depicted as a single set of arrows in Figure 4 (402, 404) and in other places (412, 502, 504, 516, 610). Those schooled in the art will recognize that the message exchange consists of at least 3 separate messages (INVITE, 200 OK, ACK). Additional messages (not shown) may be used for authorization, authentication, vocoder negotiation, ringing indication, etc.

At 408, the communication unit 10 begins to move outside the WLAN 11. The MA 225 determines that the communication unit 10 should switch from the WLAN (initial network) to the WAN provided by the cellular BTS 14. This determination may be done by the WAN receiver 204 receiving a signal from the cellular BTS 14 and forwarding it to the controller 205.

At 410, the MA 225 generates a SIP message that includes a new registration for being sent to the enterprise server 12 when it is determined that the communication unit 10 should switch to the WAN. The registration message indicates that future calls to the communication unit 10 made via the enterprise server 13 shall be directed to the unit's private number 231, and hence, with loosely coupled networks, shall be routed to the cellular system 30 via the PSTN 20 and the link 32. The controller 205, operating in accordance with the MA 225, forwards the SIP message to the WAN transmitter 208, which sends the SIP message including the new registration to the enterprise server 12. More particularly, because the communication unit 10 has moved outside of the WLAN 11, the SIP message is sent to the cellular BTS 14. Because the SIP message is a data message, it is sent to the enterprise server 12 over the cellular packet data network 28. The receiver 303 of the enterprise server 12 receives the SIP message. The controller 305, operating in accordance with the SIP registrar 321, accepts the new registration in the SIP message and updates its registers. The SIP message is shown as REGISTRATION(PRIVATE NUMBER)/200 OK in FIG. 4. Note that the communication unit 10 may also send the registration message 410 via the WLAN 11 including AP 13, using the WLAN transmitter 207, just before it leaves WLAN coverage.

At 412, the communication unit 10 requests a handoff to the WLAN 11 by sending another SIP message (or handoff request) addressed to the private number 231 associated with the communication unit 10. More particularly, the MA 225 of the communication unit 10 generates the SIP message that includes an invitation. This SIP message indicates that the entity associated with the private number 231 is to be included in the call. To make it possible to associate the second invitation 412 with the original invitation 402, the second invitation uses a similar CALL-ID identifier as that was used in the original one. The controller 205, operating in accordance with the MA 225, forwards the SIP message including the invitation to the WAN transmitter 208, which sends the SIP message to the enterprise server 12. As described above, the SIP message is sent to the cellular BTS 14, which sends the SIP message to the enterprise server 12 over the cellular packet data network 28 because it is a data message. This SIP message is depicted as INVITE (PRIVATE NUMBER)/ 200 OK/ ACK in FIG. 4. The receiver 303 of the enterprise server 12 receives the SIP message that includes a handoff request from the communication unit 10. It should be noted that the order of the generation of the registration message 410 and the handoff request 412 can be interchanged. Note that the communication unit 10 may also send the SIP message 412 via the WLAN 11 including AP 13, using the WLAN transmitter 207, just before it leaves WLAN coverage.

At 414 the enterprise server is used as a gateway. In particular, the controller 305, operating in accordance with the SIP gateway 321 or IP PBX 317, determines which network is appropriate for providing services to the communication unit 10 based upon the handoff request received from the communication unit 10. More particularly, the enterprise server 12 determines that the communication unit 10 is moving away from the WLAN coverage 11 and wishes to join the call using its private number 231 because the communication unit 10 explicitly asked for it by sending a SIP INVITE to its own private number while the initial call identified by the CALL-ID is still in progress.

The enterprise server 12 decodes the message and then places a new call to the private number associated with the communication unit 10 on the WAN. The BTS 14 resultantly executes a conventional call setup procedure in collaboration with the cellular network 30. The WAN receiver 204 of the communication unit 10 accepts the new call over the cellular network (WAN).

At 416, the enterprise server 12 establishes a conference call between the communication unit 10 and a target communication unit 499 on the WAN. The conference call is a three-way call, as the initial call established on the WLAN 11 is still active at this point. The enterprise server 12 establishes the conference call by the controller 305 operating in accordance with the IP PBX 317.

At 418, the enterprise server 12 sends another SIP message to the communication unit's public number 229 over the WLAN 11. This SIP message is generated by the IP PBX 317 or the SIP gateway 319 and it includes a command to terminate the communication unit's audio via the WLAN. The SIP message is transmitted by the transmitter 307 over the WLAN 11 and is depicted by BYE/200 OK in FIG. 4.

The WLAN receiver 203 of the communication unit 10 receives the SIP message and accordingly switches the audio between the communication unit 10 and the target communication unit 499 over to WAN and terminates the connection via the WLAN 11 in accordance with the SIP message. The communication unit 10 may also switch the audio to the WAN as the result of the call setup procedure executed by the BTS 14 in collaboration with the cellular network 30. The enterprise server 12 also terminates the link to the communication unit 10 over the WLAN 11.

Finally, at 420 the active call is established between the communication unit 10 and the target communication unit 499 over the WAN. More particularly, the link between the communication unit 10 and the target communication unit 499 includes a link from the communication unit 10 to the cellular BTS 14, which is linked to the PSTN 20 over the voice network 30 and the methodology ends.

The above discussed methodology is also applicable to a scenario in which the target communication unit 499 initiates a call to the public number 229 associated with the communication unit 10 while the communication unit 10 is inside the WLAN 11 supported by the enterprise server 12. When the target communication unit 499 initiates the call, the enterprise server 12 determines that the communication unit 10 is within the WLAN 11 by utilizing information stored in the SIP registrar 321. After determining that the communication unit 10 is within the WLAN 11, the enterprise server 12 establishes the call via the WLAN 11. When the communication unit 10 begins to move outside of the WLAN 11, the method above would be performed beginning at 408.

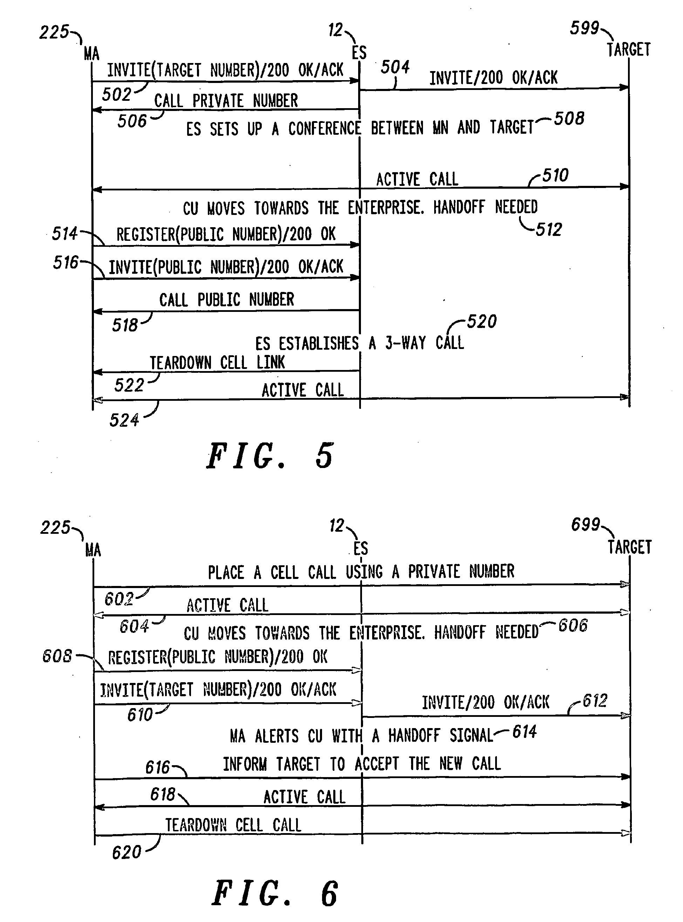

Referring to FIG. 5, the methodology or operation of the communication unit 10 and enterprise server 12 for handing off from the WAN (or initial network) to the WLAN 11 (or second network) will be discussed. In this scenario, the communication unit 10 initiates a call to a target communication unit while the communication unit 10 is outside of the WLAN 11 and is in the cellular WAN provided by the cellular BTS 14. The target communication unit is depicted by 599 in FIG. 5, but it may be any of communication units 18, 22, 26, 34 shown in FIG. 1.

The methodology begins at 502 when the communication unit 10 initiates a call to the target communication unit 599. The MA 225 determines that the communication unit 10 should use the WAN 11. This determination may be done by the WAN receiver 204 receiving a signal from the cellular BTS 14 and forwarding it to the controller 205 and or by the WLAN receiver 203 receiving a signal from WLAN 11 and forwarding it to the controller 205. The WLAN receiver 203 may indicate, for example, the absence of a WLAN signal.

In accordance with the above determinations, the MA 225 generates an SIP message for sending to the target communication unit 599. The SIP message includes an INVITE signal as well as an acknowledgement request. The communication unit's private number 231 is the originating number for this communication. The SIP message is depicted as INVITE (TARGET Number)/ 200 OK/ ACK for brevity. The controller 205 forwards this SIP message to the WAN transmitter 208, which sends it to the enterprise server 12 via the BTS 14 over the cellular packet data network 28.

At 504, the receiver 303 of the enterprise server 12 receives the SIP message. Based on this SIP message, the enterprise server 12 determines that the communication unit 10 wishes to use the WAN for service. The enterprise server's controller 305, operating in accordance with the SIP proxy 323, sends it to the target communication unit 499 via either the PSTN 20 for target communication unit 22 or the IP connection 16 for target communication unit 18. At 506, the enterprise server 12 also makes a call to the private number 231 of the communication unit 10.

Alternatively, at 504 and 506 the enterprise server 12 could only send the SIP message to the target communication unit and not contact the private number 231 of the communication unit 10. Rather, the MA 225 could send another SIP message to its private number 231 over the cellular packet data network 28 using the SIP proxy 323 and the SIP gateway 319. This approach may be necessary if the SIP proxy/gateway cannot be extended to perform additional functions like automatic calling. The SIP proxy/gateway in this approach only has to bridge the two calls to setup a conference.

At 508, the target communication unit 599 and the communication unit 10 accept the calls from the enterprise server 12, which then sets up a conference between the two calls.

At 510, the MA 225 switches the communication unit 10 to the WAN, and the call to the target communication unit 599 becomes active through the enterprise server 12.

At 512, the communication unit 10 begins to move towards or within the WLAN 11. The MA 225 determines that the communication unit 10 should switch from the WAN (initial network) to the WLAN 11 provided by the enterprise server 12. This determination may be done by the WLAN receiver 203 receiving a WLAN signal from the enterprise server 12 and forwarding it to the controller 205.

At 514, the MA 225 generates an SIP message that includes a new registration for being sent to the enterprise server 12 in order to obtain access to the WLAN 11 when it is determined that the communication unit 10 should switch to the WLAN 11. The controller 205, operating in accordance with the MA 225, forwards the SIP message to the WLAN transmitter 207, which sends the SIP message including the new registration to the enterprise server 12. The receiver 303 of the enterprise server 12 receives the SIP message (or handoff request). The controller 305, operating in accordance with the SIP registrar 321, accepts the new registration in the SIP message and updates its registers so that any later calls to the communication unit 10 will be set up over the WLAN 11.

At 516, the communication unit 10 requests a handoff to the WLAN 11 by sending another SIP message (or handoff request) addressed to the public number 229 associated with the communication unit 10. More particularly, the MA 225 of the communication unit 10 generates the SIP message that includes an invitation. The communication unit 10 uses a caller identification in this invitation that was used during the initial invitation for this call to facilitate association of the handoff request with the ongoing call. The controller 205, operating in accordance with the MA 225, forwards the SIP message including the invitation to the WLAN transmitter 207, which sends the SIP message to the enterprise server 12. This SIP message is depicted as INVITE (PRIVATE NUMBER)/ 200 OK/ ACK in FIG. 5. The receiver 303 of the enterprise server 12 receives the SIP message that includes a handoff request from the communication unit 10.

At 518 the enterprise server is used as a gateway. In particular, the controller 305, operating in accordance with the SIP gateway 321 or IP PBX 317, determines which network is appropriate for providing services to the communication unit 10 based upon the handoff request received from the communication unit 10. More particularly, the enterprise server 12 determines that the communication unit 10 is moving towards or is within the WLAN coverage 11 and wishes to join the call using its public number 229 because the communication unit 10 explicitly asked for it by sending a SIP INVITE to its own public number 229 while the initial call was still in progress.

The enterprise server 12 then places a new call to the public number 229 associated with the communication unit 10 on the WLAN 11. This may be done by the controller 305 controlling the transmitter 307 in accordance with the IP PBX 317. The WLAN receiver 203 of the communication unit 10 accepts the new call over the cellular network (WLAN).

At 520, the enterprise server 12 establishes a conference call between the communication unit 10 (via the WAN), the original call to the target communication unit 599 and the new call leg to the communication unit 10 on the WLAN 11. The conference call is a three-way call, as the initial call established on the WAN is still active at this point. The enterprise server 12 establishes the conference call by the controller 305 controlling the transmitter 307 in accordance with the IP PBX 317.

At 522, the enterprise server 12 tears down (or terminates) the initial link over the WAN between the communication unit 10 and the target communication unit 599. The MA 225 accordingly switches the audio between the communication unit 10 and the target communication unit 499 over to the WLAN 11. Alternatively, the MA 225 switches the audio over to the WLAN 11 as soon as the WLAN leg of the call was set up at 518. Finally, at 524 the active call is established between the communication unit 10 and the target communication unit 599 over the WLAN 11. More particularly, the link between the communication unit 10 and the target communication unit 599 includes a link from the communication unit 10 to the cellular enterprise server 12, which is linked to the PSTN 20 over the voice network 30.

The above discussed methodology is also applicable to a scenario in which the target communication unit 599 initiates a call to the public number 229 associated with the communication unit 10 while the communication unit 10 is outside of the WLAN 11 defined by the enterprise server 12. When the target communication unit 599 initiates the call, the enterprise server 12 determines if the communication unit 10 is within the WLAN 11 preferably by using information stored in the SIP registrar 321. After determining that the communication unit 10 is outside of the WLAN 11, the enterprise server 12 forwards the call to the communication unit's private number 231 over the WAN. When the communication unit 10 approaches or moves within the WLAN 11, the method above would be performed beginning at 513.

Referring to FIG. 6, the methodology or operation of the communication unit 10 and enterprise server 12 for handing off from the WAN (or initial network) to the WLAN 11 (or second network) will be discussed. In this scenario, the communication unit 10 initiates a call to a target communication unit 699 while the communication unit 10 is outside of the WLAN 11 and in a cellular calling area or WAN that is not in close proximity to the WLAN 11. The target communication unit is depicted by 699 in FIG. 6, but it may be any of communication units 18, 22, 26, 34 shown in FIG. 1.

The methodology begins at 602 when the communication unit 10 initiates a call to the target communication unit 699. The MA 225 again determines that the communication unit 10 should use a WAN as at 502. Accordingly, the MA 225 (or the controller 205 operating in accordance with the MA 225) places a call to the target communication unit 699 over the WAN using the communication unit's private number 231 as the originator of the call. At 604, the target communication unit 699 responds to this call and an active call is established over the WAN. It should be noted that the enterprise server 12 is not involved in the call in this scenario.

A registration process is performed prior to when the communication unit 10 initiates the call to the target communication unit 26. In this registration process, the MA 225 generates a SIP message. The SIP message includes a new registration as discussed above. The controller 205, operating in accordance with the MA 225, forwards the SIP message to the WAN transmitter 208, which sends the SIP message including the new registration to the enterprise server 12 via the cellular packet data network. The enterprise server 12, operating in accordance with the SIP registrar 321, accepts the new registration in the SIP message and updates its registers.

At 606, the communication unit 10 approaches or enters the WLAN 11. A handoff resultantly becomes necessary. Accordingly, at 608 the MA 225 generates a SIP message addressed to the communication unit's public number 229. The SIP message includes a new registration for being sent to the enterprise server 12 in order to obtain access to the WLAN 11 when it is determined that the communication unit 10 should switch to the WLAN 11. The controller 205, operating in accordance with the MA 225, forwards the SIP message to the WLAN transmitter 208, which sends the SIP message including the new registration to the enterprise server 12 via the AP 13. The receiver 303 of the enterprise server 12 receives the SIP message. The controller 305, operating in accordance with the SIP registrar 321, accepts the new registration in the SIP message and updates its registers. As part of this registration procedure 608, the communication unit 10 obtains access to the WLAN network 11.

At 610, the MA 225 determines that the communication unit 10 should switch to the WLAN 11 and accordingly initiates a new call with the target communication unit 699 by sending an SIP INVITE to the enterprise server 12 via one of the access points 13 within the WLAN 11 for being sent to the target communication unit 699. The communication unit 10 uses its public number 229 as the originator of the call. At 612, the enterprise server 12, used as a gateway, sends the SIP INVITE to the target communication unit 699.

At 614, the MA 225 alerts the user of the communication unit 10 to inform the other party to accept the new call. This can be done by the MA 225 generating an indication in the display 213 or an audio message via the speaker 209.

At 616, the user of the communication unit 10 accordingly informs the user of the target communication unit 699 to accept the new call by speaking over the initial connection on the cellular WAN.

The processes above require that the user of the communication unit 10 be made aware of the handoff at 614 and participates in it at 616. This is not needed in an alternative implementation, where the communication unit 10 informs the user of the target communication unit 699 without assistance of the user of the communication unit 10. For this alternative, at 606, the MA 225 generates an appropriate notification to request that the user of the target communication unit 699 accept the new call. The message can be a text message or an audio message. At 610, the MA 225 of the communication unit 10 includes the notification in the SIP INVITE for being sent to the target communication unit 699. For this alternative, the process at 614 is not needed because, at 616, the communication unit 699 decodes the notification in the SIP INVITE and informs the user of the target communication unit 699 to accept the new call by displaying or playing the notification. This may include additional audible and visible alerts.

At 618, the target communication unit 699 places the initial call on hold and accepts the new call. The MA 225 detects that the target communication unit 699 has accepted the new call and switches the communication unit 10 to the new or WLAN call. A new active call is resultantly established on the WLAN 11. Finally, the MA 225 tears-down or terminates the initial call that was placed over the WAN. Note that the target communication unit 699 must have call waiting service for this method.

The above discussed methodology is also applicable to a scenario in which the target communication unit 699 initiates a call to the private number 231 associated with the communication unit 10 while the communication unit 10 is within the WLAN 11 defined by the enterprise server 12. When the target communication unit 699 initiates the call, an active call is established over a cellular network or WAN. From here, the method above would be performed beginning at 606. A decision on whether to switch to the WLAN 11 may be based upon a determination if a cost associated with service on the cellular network is significantly higher than a cost associated with service on the WLAN 11. For example, the communication unit 10 would initiate the new call at 608 only if it was determined that that the long-distance calling charges incurred with this new call would be significantly lower than the cellular air-time charges incurred on the original incoming call.

The methodology discussed above with respect to FIG. 4 refers to calls that are made from or to the communication unit 10 while that unit is in the WLAN 11. However, a similar handoff can be accomplished during calls that are made from or to the communication unit 10 while the unit is outside of the WLAN 11 but within the coverage of a cellular BTS 14, 24 depending in part on how the call that is being handed off has been established. Two such scenarios were discussed above with respect to FIGS. 5 and 6, respectively. In the scenario discussed above with respect to FIG. 5, call control and audio are forced to pass through the enterprise server 12 at the start of the call. There is an additional load on the enterprise server 12 and the connecting networks 32, 20, 30, but the handoff procedure is simpler than the scenario discussed above with respect to FIG. 6 in which call control and audio initially bypass the enterprise server 12, but are forced to pass though it at the time of the handoff.

Therefore, the present invention provides a novel methodology and apparatus for a handoff between a cellular network and a WLAN. The novel apparatus is preferably embodied by a mobility agent installed within a communication unit having dual operating mode capability. The novel methodology is preferably executed by the communication unit 10, enterprise server 12 and target communication unit. The novel methodology results in the superior result of an improved handoff of a communication unit between a WAN and a WLAN with limited or no degradation of voice quality.

For simplicity, certain of the above described message exchanges were depicted as a single set of arrows. However, those skilled in the art should appreciate that the message exchange consists of at least 3 separate messages (INVITE, 200 OK, ACK). Additional messages (not shown) may be used for authorization, authentication, vocoder negotiation, ringing indication, etc.

As mentioned above, the communication unit as well as the target communication unit includes a public number 229 and a private number 231. The public number 229 is a telephone number that terminates at the enterprise server 12. More generally, when a legacy call is made from the PSTN 20 or cellular wide area network to the public number 229, the call will be routed by the enterprise server 12. When a call is addressed to a communication unit's public number 229 over the WLAN 11 or when session initiation protocol messages are sent to a communication unit 11, 34 while it is in the WLAN 11, the messages will be addressed to a SIP URL. More particularly, addressing a call or a message to a communication unit's public number 229 will result in the call or the message being addressed to a SIP request URL that is derived from, or associated with that public number 229. For example, the public number 1 234 567 8901 may result in a SIP request URL such as:
sip:12345678901 @someenterprise.com; or sip:nbr12345678901 @someenterprise.com.
The SIP request URL may change as the message is being processed for final delivery. For example, the ES 12 may use information in the SIP registrar 321 with a URL that describes the communication unit's current IP address.

## Claims

1. A method for providing a handoff of an ongoing call of a communication unit (10) between an initial network (11) and a second network, wherein the initial network (11) is a wireless local area network and the second network is a cellular network, the method comprising:
initiating a first call over the initial network (11) between the communication unit (10) and a target, wherein the communication unit (10) has a public number (229) for communicating while in the initial network (11);
determining, by the communication unit (10), while the first call is ongoing, if the communication unit (10) should switch from the initial network (11) to the second network for obtaining service;
when determining that the communication unit (10) should switch from the initial network (11) to the second network, requesting the handoff to the second network by the communication unit (10) sending a first session initiation protocol message for a second call addressed to a private number (231) associated with the communication unit (10) wherein the private number (231) is for communicating with the communication unit (10) while the communication unit (10) is in the second network;
in response to receiving the first session initiation protocol message for the second call at an enterprise server (12) serving the initial network (11), placing the second call to the private number (231); and
accepting the second call at the communication unit (10) over the second network.

2. The method of claim 1, further comprising registering with an enterprise server (12) for obtaining access to the second network when it is determined that the communication unit (10) should switch to the second network prior to the requesting of the handoff.

3. The method of claim 1, wherein:
the determining if the communication unit (10) should switch to the second network for obtaining service further comprises determining if the communication unit (10) should switch from a wireless local area network to a cellular network; and
the sending the first session initiation protocol message for the second call comprises sending the first session initiation protocol message over a cellular packet data network to the private number (231).

4. The method of claim 3, wherein the second call is to the private number (231) and the accepting of the second call further comprises accepting the second call over the cellular network.

5. The method of claim 1, wherein:
the determining if the communication unit (10) should switch to the second network for obtaining service further comprises determining if the communication unit (10) should switch to a wireless local area network; and
when requesting that the communication unit (10) should switch from the second network to the wireless local area network requesting the handoff is performed by sending by the communication unit (10) a second session initiation protocol message over the wireless local area network to the public number (229) using the enterprise server (12) as a gateway; and
accepting by the communication unit (10), the call to the public number (229) over the wireless local are network.

6. The method of claim 5, wherein the determining if the communication unit (10) should switch to the wireless local area network for obtaining service further comprises determining if a wireless local area network signal is received from the enterprise server (12).

7. The method of claim 5, wherein:
the sending the second session initiation protocol message to the public number (229) comprises sending the second session initiation protocol message to the public number (229) over a cellular packet data network.

8. The method of claim 5, wherein the determining if the communication unit (10) should switch to the wireless local area network further comprises determining if a cost associated with service on a cellular network is significantly higher than a cost associated with service on the wireless local area network.

9. The method of claim 1 further comprising; setting up a three-way call using the enterprise server (12).

10. The method of claim 9 wherein the enterprise server (12) acts as a gateway.

11. A method at a server serving a wireless local area network for providing a handoff for a first communication unit (10) between the wireless local area network and a cellular network, where the first communication unit (10) has a public number (229) terminating on the server and where the first communication unit (10) has a private number (231) for communicating in the cellular network, the method comprising:
initiating a first call between the first communication unit (10) and a target communication unit, the first call using the public number (229);
while the first call is ongoing, receiving a session initiation protocol message from the first communication unit (10), the session initiation protocol message requesting a second call, the second call directed to the private number (231); and
in response to receiving the session initiation protocol message, initiating the second call as a conventional call to the first communication unit (10) on the private number (231) and establishing a conference call including the first communication unit (10) and the target communication unit.

12. The method of claim 11, further comprising;
prior to receiving the session initiation protocol message requesting the second call, receiving registration information from the first communication unit (10); and
in response to receiving registration information from the first communication unit (10), updating session initiation protocol registers based upon the registration information.

13. The method of claim 11, further comprising pursuant to establishing the conference call terminating the first call at the first communication unit (10) and retaining the second call to establish a call between the first communication unit (10) and the target communication unit, the established call using the private number (231).

14. The method of claim 11, wherein:
the receiving of the session initiation protocol message requesting the second call further comprises receiving session initiation protocol message requesting the second call via a cellular packet data network.

15. The method of claim 11, wherein:
the receiving the session initiation protocol message requesting the second call further comprises receiving the session initiation protocol message over the wireless local area network.

16. A communication unit with dual operating mode capability, the communication unit comprising:
a memory for storing a first number of the communication unit and a second number of the communication unit, the first number for communicating with the communication unit while the communication unit is operating in a wireless local area network via a server of the wireless local area network, the second number for communicating with the communication unit while the communication unit is operating in a cellular network;
a mobility agent for generating a first and second session initiation protocol message where the first session initiation protocol message establishes a first call between the communication unit and a target, the first call using the first number, and where the second initiation protocol message includes a hand off request for the first call, the second initiation protocol message requesting the setup of a second call, the second call directed to a private number (231) associated with the communication unit (10) wherein the private number (231) is for communicating with the communication unit (10) while the communication unit (10) is in the second network;
a receiver for determining when to switch from the wireless local area network to the cellular network and for receiving a request for the second call to the private number; and
a transmitter for sending the second session initiation protocol message when it is determined to switch to the cellular network.

17. The communication unit of claim 16, wherein:
the receiver is further for receiving the second call as a call directed to the second number.

18. The communication unit of claim 16, wherein the mobility agent is further for generating the first and second session initiation protocol message using a common call identifier.

## Patentansprüche

1. Verfahren zum Bereitstellen eines Handoffs eines laufenden Anrufs einer Kommunikationseinheit (10) zwischen einem ursprünglichen Netzwerk (11) und einem zweiten Netzwerk, wobei das ursprüngliche Netzwerk (11) ein drahtloses lokales Netzwerk und das zweite Netzwerk ein zellulares Netzwerk ist, wobei das Verfahren umfasst:
Initiieren eines ersten Anrufs über das ursprüngliche Netzwerk (11) zwischen der Kommunikationseinheit (10) und einem Ziel, wobei die Kommunikationseinheit (10) über eine öffentliche Nummer (229) zum Kommunizieren verfügt, während sie sich in dem ursprünglichen Netzwerk (11) befindet;
Bestimmen, durch die Kommunikationseinheit (10), während der erste Anruf läuft, ob die Kommunikationseinheit (10) von dem ursprünglichen Netzwerk (11) zu dem zweiten Netzwerk zum Erhalten eines Dienstes umschalten soll;
wenn bestimmt wird, dass die Kommunikationseinheit (10) von dem ursprünglichen Netzwerk (11) zu dem zweiten Netzwerk umschalten soll, Anfordern des Handoffs zu dem zweiten Netzwerk **dadurch**, dass die Kommunikationseinheit (10) eine erste Sitzungsinitiierungsprotokollnachricht für einen zweiten Anruf sendet, die an eine private Nummer (231) adressiert ist, die mit der Kommunikationseinheit (10) verknüpft ist, wobei die private Nummer (231) zum Kommunizieren mit der Kommunikationseinheit (10) bestimmt ist, während sich die Kommunikationseinheit (10) in dem zweiten Netzwerk befindet;
in Reaktion auf ein Empfangen der ersten Sitzungsinitiierungsprotokollnachricht für den zweiten Anruf bei einem Betriebsserver (12), der das ursprüngliche Netzwerk (11) versorgt, Legen des zweiten Anrufs auf die private Nummer (231); und
Akzeptieren des zweiten Anrufs bei der Kommunikationseinheit (10) über das zweite Netzwerk.

2. Verfahren gemäß Anspruch 1, das weiterhin umfasst: Anmelden bei einem Betriebsserver (12) zum Erlangen eines Zugriffs auf das zweite Netzwerk, wenn bestimmt wird, dass die Kommunikationseinheit (10) vor dem Anfordern des Handoffs zu dem zweiten Netzwerk umschalten soll.

3. Verfahren gemäß Anspruch 1, wobei:
das Bestimmen, ob die Kommunikationseinheit (10) zu dem zweiten Netzwerk zum Erlangen eines Dienstes umgeschaltet werden soll, weiterhin umfasst: Bestimmen, ob die Kommunikationseinheit (10) von einem drahtlosen lokalen Netzwerk zu einem zellularen Netzwerk umgeschaltet werden soll; und
das Senden der ersten Sitzungsinitiierungsprotokollnachricht für den zweiten Anruf ein Senden der ersten Sitzungsinitiierungsprotokollnachricht über ein zellulares Paketdatennetzwerk an die private Nummer (231) umfasst.

4. Verfahren gemäß Anspruch 3, wobei der zweite Anruf an die private Nummer (231) geht und das Akzeptieren des zweiten Anrufs weiterhin ein Akzeptieren des zweiten Anrufs über das zellulare Netzwerk umfasst.

5. Verfahren gemäß Anspruch 1, wobei
das Bestimmen, ob die Kommunikationseinheit (10) zu dem zweiten Netzwerk zum Erlangen eines Dienstet umgeschaltet werden soll, weiterhin umfasst: Bestimmen, ob die Kommunikationseinheit (10) zu einem drahtlosen lokalen Netzwerk umgeschaltet werden soll; und
wenn angefordert wird, dass die Kommunikationseinheit (10) von dem zweiten Netzwerk zu dem drahtlosen lokalen Netzwerk umgeschaltet werden soll, ein Anfordern des Handoffs **dadurch** durchgeführt wird, dass durch die Kommunikationseinheit (10) eine zweite Sitzungsinitiierungsprotokollnachricht über das drahtlose lokale Netzwerk an die öffentliche Nummer (229) unter Verwendung des Betriebsservers (12) als ein Gateway gesendet wird; und
Akzeptieren des Anrufs zu der öffentlichen Nummer (229) über das drahtlose lokale Netzwerk durch die Kommunikationseinheit (10).

6. Verfahren gemäß Anspruch 5, wobei das Bestimmen, ob die Kommunikationseinheit (10) zu dem drahtlosen lokalen Netzwerk zum Erlangen eines Dienstes umschalten soll, weiterhin umfasst: Bestimmen, ob ein drahtloses lokales Netzwerksignal von dem Betriebsserver (12) empfangen wird.

7. Verfahren gemäß Anspruch 5, wobei
das Senden der zweiten Sitzungsinitiierungsprotokollnachricht an die öffentliche Nummer (229) umfasst: Senden der zweiten Sitzungsinitiierungsprotokollnachricht an die öffentliche Nummer (229) über ein zellulares Paketdatennetzwerk.

8. Verfahren gemäß Anspruch 5, wobei das Bestimmen, ob die Kommunikationseinheit (10) zu dem drahtlosen lokalen Netzwerk umschalten soll, weiterhin umfasst: Bestimmen, ob ein Kostenaufwand, der mit einem Dienst in einem zellularen Netzwerk verknüpft ist, signifikant höher ist, als ein Kostenaufwand, der mit einem Dienst in dem drahtlosen lokalen Netzwerk verknüpft ist.

9. Verfahren gemäß Anspruch 1, das weiterhin umfasst: Einrichten einer Dreierverbindung unter Verwendung des Betriebsservers (12).

10. Verfahren gemäß Anspruch 9, wobei der Betriebsserver (12) als ein Gateway agiert.

11. Verfahren bei einem Server, der ein drahtloses lokales Netzwerk versorgt, zum Bereitstellen eines Handoffs für eine erste Kommunikationseinheit (10) zwischen dem drahtlosen lokalen Netzwerk und einem zellularen Netzwerk, wobei die erste Kommunikationseinheit (10) über eine öffentliche Nummer (229) verfügt, die auf den Server begrenzt ist, und wobei die erste Kommunikationseinheit (10) über eine private Nummer (231) zum Kommunizieren in dem zellularen Netzwerk verfügt, wobei das Verfahren umfasst:
Initiieren eines ersten Anrufs zwischen der ersten Kommunikationseinheit (10) und einer Zielkommunikationseinheit, wobei der erste Anruf die öffentliche Nummer (229) verwendet;
während der Anruf läuft, Empfangen einer Sitzungsinitiierungsprotokollnachricht von der ersten Kommunikationseinheit (10), wobei die Sitzungsinitiierungsprotokollnachricht einen zweiten Anruf anfordert und der zweite Anruf an die private Nummer (231) gerichtet ist; und
in Reaktion auf ein Empfangen der Sitzungsinitiierungsprotokollnachricht, Initiierren des zweiten Anrufs als ein konventioneller Anruf an die erste Kommunikationseinheit (10) auf der privaten Nummer (231) und Einrichten einer Konferenzverbindung, die die erste Kommunikationseinheit (10) und die Zielkommunikationseinheit umfasst.

12. Verfahren gemäß Anspruch 11, das weiterhin umfasst:
vor einem Empfangen der Sitzungsinitiierungsprotokollnachricht, die den zweiten Anruf anfordert, Empfangen von Registrierungsinformationen von der ersten Kommunikationseinheit (10); und
in Reaktion auf ein Empfangen von Registrierungsinformationen von der ersten Kommunikationseinheit (10), Aktualisieren von Sitzungsinitiierungsregistern basierend auf den Registrierungsinformationen.

13. Verfahren gemäß Anspruch 11, das weiterhin umfasst: entsprechend einem Einrichten der Konferenzverbindung, Beenden des ersten Anrufs bei der ersten Kommunikationseinheit (10) und Halten des zweiten Anrufs, um einen Anruf zwischen der ersten Kommunikationseinheit (10) und der Zielkommunikationseinheit einzurichten, wobei der eingerichtete Anruf die private Nummer (231) verwendet.

14. Verfahren gemäß Anspruch 11, wobei:
das Empfangen der Sitzungsinitiierungsprotokollnachricht, die den zweiten Anruf anfordert, weiterhin umfasst: Empfangen einer Sitzungsinitiierungsprotokollnachricht, die den zweiten Anruf über ein zellulares Paketdatennetzwerk anfordert.

15. Verfahren gemäß Anspruch 11, wobei:
das Empfangen der Sitzungsinitiierungsprotokollnachricht, die den zweiten Anruf anfordert, weiterhin umfasst: Empfangen der Sitzungsinitiierungsprotokollnachricht über das drahtlose lokale Netzwerk.

16. Kommunikationseinheit mit einer dualen Betriebsartfähigkeit, wobei die Kommunikationseinheit umfasst:
einen Speicher zum Speichern einer ersten Nummer der Kommunikationseinheit und einer zweiten Nummer der Kommunikationseinheit, wobei die erste Nummer einem Kommunizieren mit der Kommunikationseinheit dient, während die Kommunikationseinheit in einem drahtlosen lokalen Netzwerk über einen Server des drahtlosen lokalen Netzwerkes arbeitet, und die zweite Nummer einem Kommunizieren mit der Kommunikationseinheit dient, während die Kommunikationseinheit in einem zellularen Netzwerk arbeitet;
einen Mobilitätsagenten zum Erzeugen einer ersten und zweiten Sitzungsinitiierungsprotokollnachricht, wobei die erste Sitzungsinitiierungsprotokollnachricht einen ersten Anruf zwischen der Kommunikationseinheit und einem Ziel einrichtet, wobei der erste Anruf die erste Nummer verwendet, und wobei die zweite Initiierungsprotokollnachricht eine Handoff-Anforderung für den ersten Anruf umfasst, wobei die zweite Initiierungsprotokollnachricht die Einrichtung eines zweiten Anrufs anfordert, der zweite Anruf an eine private Nummer (231) gerichtet ist, die mit der Kommunikationseinheit (10) verknüpft ist, wobei die private Nummer (231) zum Kommunizieren mit der Kommunikationseinheit (10) dient, während sich die Kommunikationseinheit (10) in dem zweiten Netzwerk befindet;
einen Empfänger zum Bestimmen, wann von dem drahtlosen lokalen Netzwerk zu dem zellularen Netzwerk umgeschaltet werden soll, und zum Empfangen einer Anforderung für den zweiten Anruf an die private Nummer; und
einen Sender zum Senden der zweiten Sitzungsinitiierungsprotokollnachricht, wenn bestimmt wird, auf das zellulare Netzwerk umzuschalten.

17. Kommunikationseinheit gemäß Anspruch 16, wobei:
der Empfänger weiterhin einem Empfangen des zweiten Anrufs als einen an die zweite Nummer gerichteten Anruf dient.

18. Kommunikationseinheit gemäß Anspruch 16, wobei der Mobilitätsagent weiterhin dazu dient, die erste und zweite Sitzungsinitiierungsprotokollnachricht unter Verwendung eines gemeinsamen Anrufidentifizierers zu erzeugen.

## Revendications

1. Procédé pour la réalisation d'un transfert d'une communication entrante d'une unité de communication (10) entre un réseau initial (11) et un deuxième réseau, le réseau initial (11) étant un réseau local sans fil et le deuxième réseau étant un réseau cellulaire, le procédé comprenant les étapes selon lesquelles :
une première communication est démarrée sur le réseau initial (11) entre l'unité de communication (10) et une cible, l'unité de communication (10) ayant un numéro public (229) pour communiquer tandis qu'elle se trouve sur le réseau initial (11) ;
l'unité de communication (10) détermine, tandis que la première communication est en cours, si l'unité de communication (10) doit commuter du réseau initial (11) vers le deuxième réseau pour obtenir un service ;
lorsqu'il est déterminé que l'unité de communication (10) doit commuter du réseau initial (11) vers le deuxième réseau, le transfert vers le deuxième réseau est demandé par le fait que l'unité de communication (10) envoie un premier message de protocole de démarrage de session pour une deuxième communication adressée à un numéro privé (231) associé à l'unité de communication (10), le numéro privé (231) permettant de communiquer avec l'unité de communication (10) tandis que l'unité de communication (10) se trouve sur le deuxième réseau ;
en réponse à la réception du premier message de protocole de démarrage de session pour la deuxième communication au niveau d'un serveur d'entreprise (12) desservant le réseau initial (11), la deuxième communication est lancée vers le numéro privé (231) ; et
la deuxième communication est acceptée par l'unité de communication (10) sur le deuxième réseau.

2. Procédé selon la revendication 1, comprenant en outre, avant la demande de transfert, lorsqu'il est déterminé que l'unité de communication (10) doit commuter vers le deuxième réseau, l'étape d'enregistrement auprès d'un serveur d'entreprise (12) pour obtenir un accès au deuxième réseau.

3. Procédé selon la revendication 1, dans lequel :
l'étape consistant à déterminer si l'unité de communication (10) doit commuter vers le deuxième réseau pour obtenir un service comprend en outre l'étape consistant à déterminer si l'unité de communication (10) doit commuter d'un réseau local sans fil vers un réseau cellulaire ; et
l'étape d'envoi du premier message de protocole de démarrage de session pour la deuxième communication comprend l'envoi du premier message de protocole de démarrage de session sur un réseau à cellulaire commutation de paquets au numéro privé (231).

4. Procédé selon la revendication 3, dans lequel la deuxième communication est adressée au numéro privé (231) et l'étape d'acceptation de la deuxième communication comprend en outre l'acceptation de la deuxième communication sur le réseau cellulaire.

5. Procédé selon la revendication 1, dans lequel :
l'étape consistant à déterminer si l'unité de communication (10) doit commuter vers le deuxième réseau pour obtenir un service comprend en outre l'étape consistant à déterminer si l'unité de communication (10) doit commuter vers un réseau local sans fil ; et
lorsqu'il est demandé que l'unité de communication (10) commute du deuxième réseau vers le réseau local sans fil, la demande de transfert est effectuée par envoi d'un deuxième message de protocole de démarrage de session sur le réseau local sans fil au numéro public (229) par l'unité de communication (10), avec le serveur d'entreprise (12) en tant que passerelle ; et
la communication vers le numéro public (229) sur le réseau local sans fil est acceptée par l'unité de communication (10).

6. Procédé selon la revendication 5, dans lequel l'étape consistant à déterminer si l'unité de communication (10) doit commuter vers le réseau local sans fil pour obtenir un service comprend en outre l'étape consistant à déterminer si un signal de réseau local sans fil est reçu en provenance du serveur d'entreprise (12).

7. Procédé selon la revendication 5, dans lequel :
l'étape consistant à envoyer le deuxième message de protocole de démarrage de session au numéro public (229) comprend l'envoi du deuxième message de protocole de démarrage de session au numéro public (229) sur le réseau cellulaire à commutation de paquets.

8. Procédé selon la revendication 5, dans lequel l'étape consistant à déterminer si l'unité de communication (10) doit commuter vers le réseau local sans fil comprend en outre l'étape consistant à déterminer si un coût associé à un service sur un réseau cellulaire est considérablement plus élevé qu'un coût associé à un service sur le réseau local sans fil.

9. Procédé selon la revendication 1, comprenant en outre l'étape consistant à établir une communication tridirectionnelle à l'aide du serveur d'entreprise (12).

10. Procédé selon la revendication 9, dans lequel le serveur d'entreprise (12) joue le rôle d'une passerelle.

11. Procédé au sein d'un serveur desservant un réseau local sans fil pour la réalisation d'un transfert pour une première unité de communication (10) entre le réseau local sans fil et un réseau cellulaire, où la première unité de communication (10) a un numéro public (229) aboutissant sur le serveur et la première unité de communication (10) a un numéro privé (231) pour communiquer sur le réseau cellulaire, le procédé comprenant les étapes selon lesquelles :
une première communication est démarrée entre la première unité de communication (10) et une unité de communication cible, la première communication utilisant le numéro public (229) ;
tandis que la première communication est en cours, un message de protocole de démarrage de session est reçu de la première unité de communication (10), le message de protocole de démarrage de session demandant une deuxième communication, la deuxième communication étant dirigée vers le numéro privé (231) ; et
en réponse à la réception du message de protocole de démarrage de session, la deuxième communication est démarrée sous la forme d'une communication classique vers la première unité de communication (10) sur le numéro privé (231) et une communication en conférence est établie, qui inclut la première unité de communication (10) et l'unité de communication cible.

12. Procédé selon la revendication 11, comprenant en outre :
avant la réception du message de protocole de démarrage de session demandant la deuxième communication, la réception d'informations d'enregistrement en provenance de la première unité de communication (10) ; et
en réponse à la réception d'informations d'enregistrement en provenance de la première unité de communication (10), la mise à jour des registres de protocole de démarrage de session en fonction des informations d'enregistrement.

13. Procédé selon la revendication 11, comprenant en outre l'étape consistant à poursuivre l'établissement de la communication en conférence en mettant fin à la première communication au niveau de la première unité de communication (10) et en conservant la deuxième communication pour établir une communication entre la première unité de communication (10) et l'unité de communication cible, la communication établie utilisant le numéro privé (231).

14. Procédé selon la revendication 11, dans lequel :
l'étape de réception du message de protocole de démarrage de session demandant la deuxième communication comprend en outre la réception du message de protocole de démarrage de session demandant la deuxième communication via un réseau cellulaire à commutation de paquets.

15. Procédé selon la revendication 11, dans lequel :
l'étape de réception du message de protocole de démarrage de session demandant la deuxième communication comprend en outre la réception du message de protocole de démarrage de session demandant la deuxième communication sur le réseau local sans fil.

16. Unité de communication pouvant fonctionner en mode double, l'unité de communication comprenant :
une mémoire pour stocker un premier numéro de l'unité de communication et un deuxième numéro de l'unité de communication, le premier numéro servant pour communiquer avec l'unité de communication tandis que l'unité de communication fonctionne sur un réseau local sans fil via un serveur du réseau local sans fil, le deuxième numéro servant pour communiquer avec l'unité de communication tandis que l'unité de communication fonctionne sur un réseau cellulaire ;
un agent de mobilité pour générer un premier et un deuxième messages de protocole de démarrage de session, où le premier message de protocole de démarrage de session établit une première communication entre l'unité de communication et une cible, la première communication utilisant le premier numéro, et où le deuxième message de protocole de démarrage de session inclut une demande de transfert pour la première communication, le deuxième message de protocole de démarrage demandant l'établissement d'une deuxième communication, la deuxième communication étant dirigée vers un numéro privé (231) associé à l'unité de communication (10), lequel numéro privé (231) sert pour communiquer avec l'unité de communication (10) tandis que l'unité de communication (10) se trouve sur le deuxième réseau ;
un récepteur pour déterminer quand commuter du réseau local sans fil vers le réseau cellulaire et pour recevoir une demande pour la deuxième communication vers le numéro privé ; et
un émetteur pour envoyer le deuxième message de protocole de démarrage de session lorsqu'il est déterminé qu'il faut commuter vers le réseau cellulaire.

17. Unité de communication selon la revendication 16, dans laquelle :
le récepteur est en outre destiné à recevoir la deuxième communication sous la forme d'une communication dirigée vers le deuxième numéro.

18. Unité de communication selon la revendication 16, dans laquelle l'agent de mobilité est en outre destiné à générer le premier et le deuxième messages de protocole de démarrage de session en utilisant un identifiant de communication commun.
